Europäisches Patentamt

European Patent Office

Office européen des brevets

(19)

(11) Numéro de publication: **0 223 666**
**B1**

(12) **FASCICULE DE BREVET EUROPEEN**

(45) Date de publication du fascicule du brevet:
**03.01.90**

(51) Int. Cl.⁴: **E21B 43/013**, F16L 37/00

(21) Numéro de dépôt: **86402316.3**

(22) Date de dépôt: **16.10.86**

(54) **Dispositif et méthode de mise en place et de connexion à distance d'une extrémité d'un élément allongé à un connecteur.**

(30) Priorité: **18.10.85 FR 8515500**

(43) Date de publication de la demande:
**27.05.87 Bulletin 87/22**

(45) Mention de la délivrance du brevet:
**03.01.90 Bulletin 90/1**

(84) Etats contractants désignés:
**ES GB NL**

(56) Documents cités:
**FR-A- 2 399 609**
**GB-A- 2 108 613**
**US-A- 3 586 103**
**US-A- 3 921 684**
**US-A- 4 102 146**

(73) Titulaire: **INSTITUT FRANCAIS DU PETROLE, 4, Avenue de Bois-Préau, F-92502 Ruell-Malmaison(FR)**

(72) Inventeur: **Castel, Yvon, 35, rue des Cerisiers, F-78290 Croissy sur Seine(FR)**

(74) Mandataire: **Aubel, Pierre et al, Institut Français du Pétrole Département Brevets 4, avenue de Bois Préau, F-92502 Ruell-Malmaison(FR)**

## Description

La présente invention concerne une méthode et un dispositif de mise en place et de connexion à distance d'une extrémité d'un élément allongé, la connexion se faisant sur un connecteur solidaire d'une installation qui sera qualifiée d'installation principale.

Cette invention peut être appliquée notamment au domaine de la production d'effluents pétroliers au large des côtes, lorsqu'il s'agit de connecter une extrémité d'une canalisation à un connecteur immergé à une profondeur donnée.

Jusqu'à présent, de telles connexions posaient des problèmes de fiabilité et faisaient appel à des plongeurs, ce qui limitait la profondeur à laquelle elles pouvaient être réalisées.

Le brevet US-3 921 684 décrit un dispositif permettant de connecter à distance l'extrémité d'un élément allongé avec un connecteur, mais ce dispositif, qui s'applique au dépotage des réservoirs, tels des chalands, comporte de nombreuses pièces mécaniques solidaires du chaland sur lequel la connexion est effectuée.

Ce dispositif qui est utilisé hors de l'eau en des lieux faciles d'accès, ne présente pas la fiabilité suffisante pour une utilisation en milieu sous-marin, qui est un milieu hostile à la réparation et à la conservation du matériel, et est notamment difficile d'entretien du fait de sa conception et sa solidarisation aux réservoirs.

La présente invention s'affranchit notamment de ces inconvénients en proposant un dispositif comportant une partie escamotable après connexion de l'élément allongé avec le connecteur. Ce dispositif permet, dans le cas où l'on effectue plusieurs connexions, d'utiliser à chaque fois la même partie escamotable; un entretien très facile; de réduire le nombre des pièces mécaniques, donc d'accroître la fiabilité et diminuer les coûts, de soustraire entre chaque connexion la partie escamotable du milieu hostile.

La présente invention concerne un dispositif de mise en place et de connexion à distance d'une extrémité d'un élément allongé à un connecteur solidaire d'une installation principale. Il se caractérise en ce qu'il comporte des moyens de guidage en translation de ladite extrémité dudit élément allongé, des premiers moyens de déplacement desdits moyens de guidage relativement à ladite installation principale et des deuxièmes moyens de déplacement de ladite extrémité relativement audit connecteur, et en ce que lesdits premiers moyens de déplacement sont indépendants desdits deuxièmes moyens de déplacements.

Par le terme indépendant, il faut comprendre que les deux moyens de déplacements sont disjoints ou encore physiquement séparés l'un de l'autre.

Les premiers moyens de déplacement desdits moyens de guidage pourront comporter un axe de rotation solidaire de ladite installation et autour de laquelle ils peuvent basculer entre deux positions et un vérin ayant deux extrémités, la première étant solidaire desdits moyens de guidage et la seconde de ladite installation.

Le dispositif selon l'invention pourra comporter une articulation comprenant un palier et un arbre dont l'axe est sensiblement horizontal et les moyens de guidage pourront comporter un tube ayant un axe de révolution contenu sensiblement dans un plan vertical et l'articulation pourra relier ladite installation principale audit tube.

Le connecteur pourra comporter une première butée, l'extrémité de l'élément allongé pourra comporter une deuxième butée, les deuxièmes moyens de déplacement comporter deux mors adaptés à coopérer avec les première et deuxième butées et enfin, les mors pourront être mus par un vérin.

Les deuxièmes moyens de déplacement pourront être montés sur un bras articulé solidaire de l'installation principale.

On ne sortira pas du cadre de la présente invention si les deuxièmes moyens de déplacement comportent un vérin ayant deux extrémités dont l'une est solidaire de l'installation principale et l'autre dudit bras.

Le tube de guidage pourra comporter au moins un ergot ou rail et l'extrémité de l'élément allongé pourra comporter au moins une rainure adaptée à coopérer avec ledit ergot.

L'extrémité de l'élément allongé pourra comporter au moins une rainure et le connecteur pourra comporter au moins un ergot ou rail adapté à coopérer avec ladite rainure.

Lesdits deuxièmes moyens de déplacement pourront être escamotables relativement auxdits premiers moyens de déplacement.

La présente invention concerne également une méthode pour réaliser la connexion à distance d'une extrémité d'un élément allongé avec un connecteur solidaire d'une installation principale. Elle se caractérise en ce qu'elle comporte des étapes suivantes :
- mise en place de ladite extrémité relativement à un moyen de guidage,
- déplacement dudit moyen de guidage de manière à mettre ladite extrémité et ledit connecteur dans l'alignement l'un de l'autre,
- déplacement de ladite extrémité relativement audit connecteur jusqu'à la connexion effective de ces deux éléments.
- positionnement desdits deuxièmes moyens de déplacement.

Le déplacement dudit moyen de guidage pourra correspondre à un basculement autour d'un axe sensiblement horizontal.

Le déplacement dudit moyen de guidage et le positionnement desdits deuxièmes moyens de déplacement pourront être réalisés simultanément.

Le positionnement desdits deuxièmes moyens de déplacement pourra être obtenu par le déplacement dudit moyen de guidage.

La présente invention sera mieux comprise et ses avantages apparaîtront plus nettement à la description qui suit, nullement limitative, d'un exemple particulier de réalisation illustrée par les figures ci-annexées, parmi lesquelles :

- la figure 1 représente un schéma d'ensemble d'une colonne de production de pétrole et sa liaison à un navire par une ligne de transfert,

- les figures 2 à 5 illustrent la mise en place d'une ligne de transfert d'effluents pétroliers sur une installation dite principale, telle une bouée,

- les figures 6 et 7 montrent les détails d'un moyen de déplacement de l'extrémité d'une ligne de transfert relativement à un connecteur situé sur une installation principale,

- les figures 8 à 11 représentent la connexion entre l'extrémité de la ligne de transfert et le connecteur, et

- les figures 12 et 13 illustrent deux modes de réalisation d'une extrémité de ligne de transfert, permettant le positionnement angulaire précis de cette extrémité relativement à un connecteur.

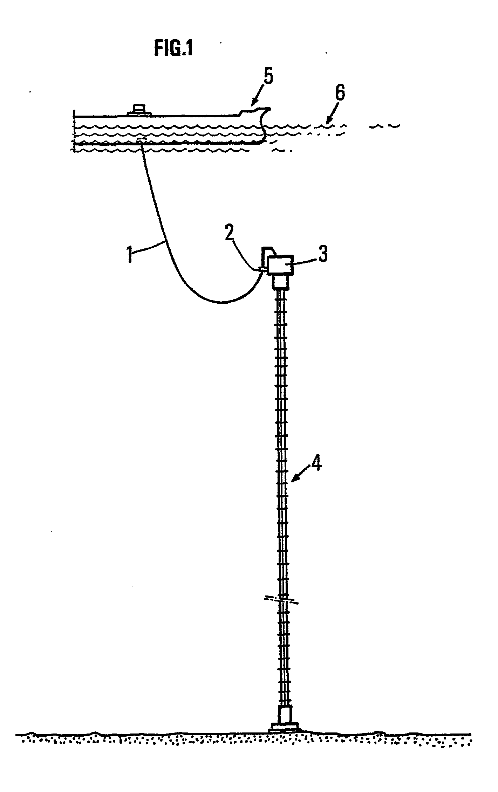

La description qui suit concerne le cas particulier de la mise en place et de la connexion d'une ligne 1 (Fig. 1) sur un connecteur 2 solidaire d'une bouée immergée 3. Cette bouée étant la partie terminale d'une colonne de transfert 4 de la production d'un site de production sous marin.

La ligne 1 pourra être reliée à un navire 5 se trouvant à la surface de l'eau 6 et pourra servir à l'acheminement de la production du puits sous marin au navire 5. D'ailleurs, cette ligne pourra comporter plusieurs conduits. Cette ligne qui est flexible une fois mise en place, est suspendue à l'une de ces extrémités au navire 5 et à son autre extrémité au connecteur 2 et prend sensiblement la forme d'une chainette.

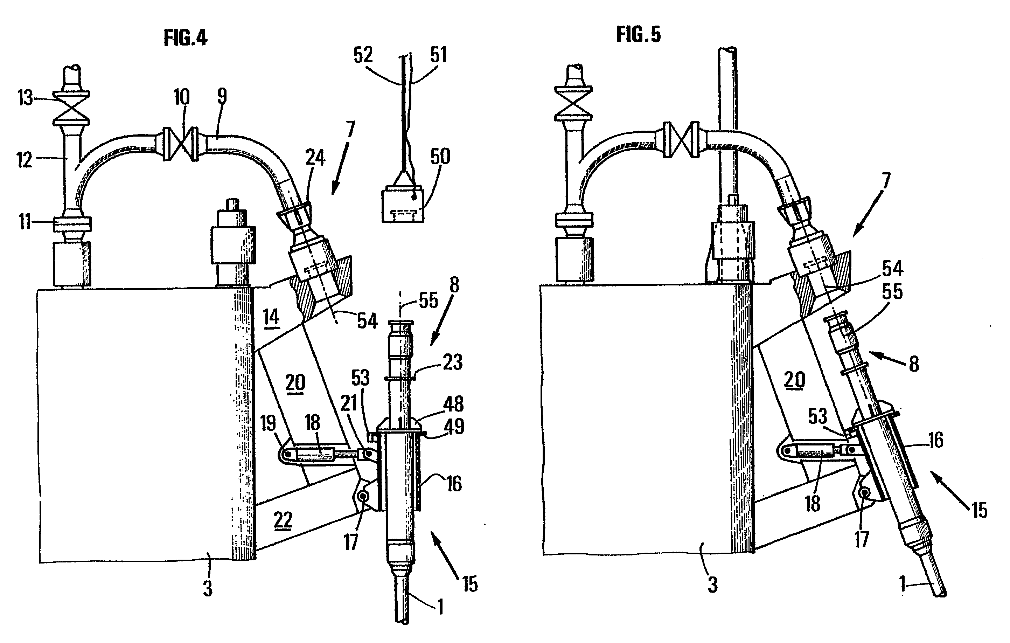

La figure 4 représente un détail de la bouée immergée 3. Sur cette figure, la référence 7 désigne le connecteur dans son ensemble sur lequel devra être fixée l'extrémité 8 de la ligne de transfert 1.

Le connecteur 7 est relié par une canalisation 9 qui pourra être en forme de col de cygne à une bride 11 par l'intermédiaire d'une vanne télécommandée 10. La bride 11 permet le branchement notamment sur un collecteur en provenance de la colonne montante 4. Selon le cas représenté à la figure 4, la canalisation en forme de col de cygne comporte une conduite de dérivation 12 permettant un accès vertical à la ligne en provenance de la colonne montante 4.

Cette conduite comporte une vanne 13 qui pourra être télécommandée. Le connecteur 7 est rendu solidaire de la bouée 3 par l'intermédiaire de la canalisation 9 et peut être guidée par un bras support 14.

La référence 15 désigne des moyens de guidage de la ligne de transfert 1. Dans le cas de la figure 4, ces moyens comportent un tube cylindrique 16 dans lequel passe la ligne 1.

Dans le cas de la figure 4, les moyens de guidage 15 peuvent être déplacés autour d'un axe 17 sensiblement horizontal grâce à un ensemble paliers arbre. Le basculement des moyens de guidage 15 est controlé par un vérin 18 qui peut être électrique ou hydraulique. Ce vérin 18 peut être télécommandé à partir de la surface.

L'une des extrémités de ce vérin est solidaire de la bouée 3, par l'intermédiaire d'une articulation 19 liée à un bras support 20 l'autre extrémité est liée aux moyens de guidage 15 par une articulation 21. ·

L'axe 17 des moyens de guidage 15 est solidaire de la bouée 3 par l'intermédiaire d'un bras support 22. Les bras support 14, 20 et 22 peuvent être solidaires les uns des autres, comme cela est représenté sur la figure 4.

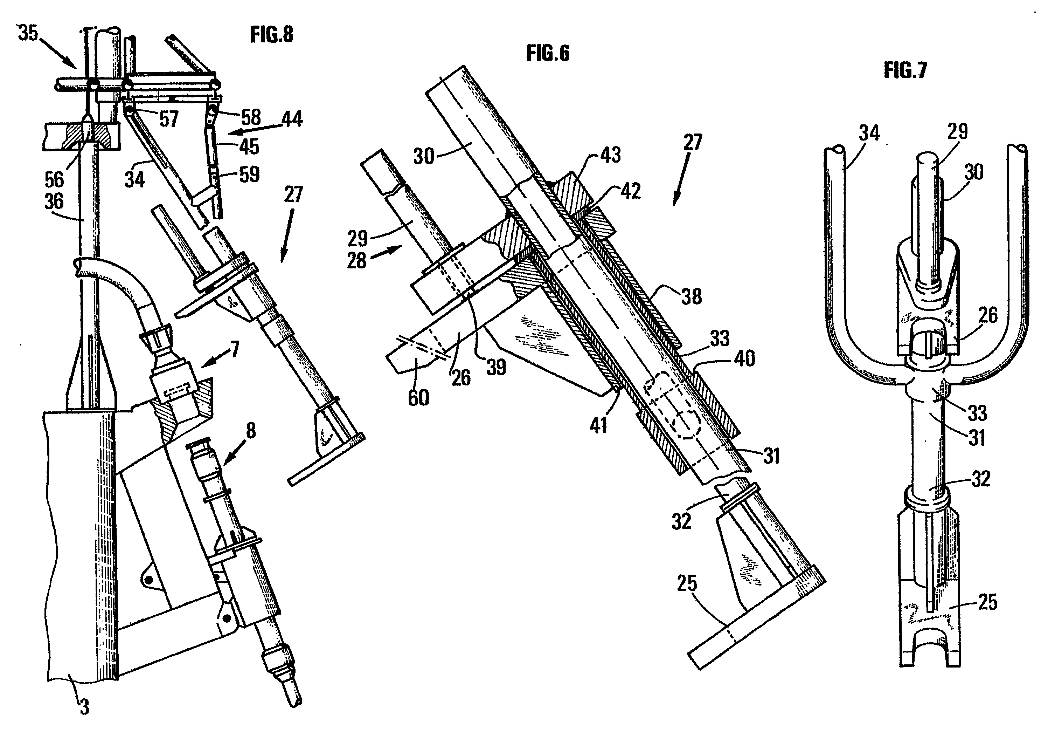

L'extrémité 8 de la ligne 1 comporte une butée d'appui 23 et le connecteur 7 est surmonté d'une autre butée d'appui 24. Ces butées d'appui 23 et 24 sont appelées à coopérer avec des mors 25 et 26 d'une pince 27 (Figs 6 et 7). Ces mors seront respectivement qualifiés de mors supérieur et inférieur.

La figure 7 est une vue de gauche de la pince représentée à la figure 6.

Les mors 25 et 26 peuvent avoir la forme de fourche pour mieux s'adapter à la forme des pièces avec lesquelles elles sont destinées à coopérer, en l'occurence, des pièces aux formes cylindriques. Dans le cas de la figure 6, les mors 25 et 26 de la pince 27 sont actionnés par un vérin 28.

Le corps 29 de ce vérin est solidaire de l'une des extrémités 30 d'une tige 31 qui a une autre extrémité 32 solidaire du mors 25.

Sur la figure 6, la deuxième extrémité 32 de cette tige 31 qui comporte le mors inférieur 25 a été dessiné à une échelle différente du reste de la figure pour en réduire l'encombrement.

La tige 31 est positionnée à l'intérieur d'un manchon de guidage cylindrique 33 à l'intérieur duquel elle peut coulisser.

Ce manchon de guidage 33 est solidaire de la bouée 3 par l'intérmédiaire de bras articulés 34 et éventuellement d'autres éléments, tels un cadre 35, et des moyens de centrage 36 de ce cadre 35 sur la bouée 3.

Le mors supérieur 26 est solidaire de moyens de guidage comportant un manchon extérieur 38 qui peut coulisser autour du manchon cylindrique 33.

Le mors supérieur 26 est également solidaire de la tige 39 du vérin 29.

La référence 40 de la figure 6 désigne une butée aménagée sur l'extrémité inférieure du manchon cylindrique, qui coopère éventuellement avec l'extrémité inférieure 41 des moyens de guidage du mors supérieur 26.

La référence 42 désigne une butée supérieure limitant la course des moyens de guidage 38 du mors supérieur 26. Cette butée est figurée par une rondelle qui peut être libre, solidaire du manchon cylindrique 33 ou faire partie intégrante de la pièce 43 qui maintient le corps 29 du vérin 28 fixe relativement à la tige 31.

Le bras articulé de soutien 34 de la pince 27 est équipée de moyens de manipulation 44 comportant un vérin 45 qui peut être télécommandé.

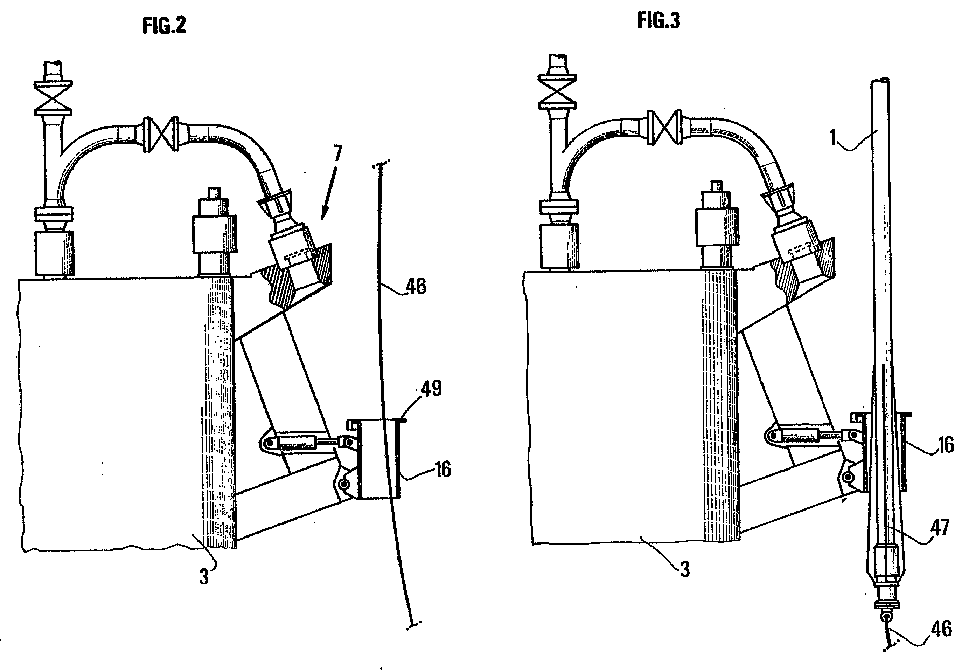

Un exemple de mise en oeuvre du dispositif décrit précédemment est donné ci-après, il suppose que la bouée 3 est déjà immergée et qu'un câble 46 passe au travers du tube cylindrique de guidage 16 (Fig. 2).

Ce câble peut être mis en place avant l'immersion de la bouée, l'une des extrémités de ce câble 46 est fixée à la ligne 1, l'autre est fixée par exemple sur un touret placé sur le navire 5. La ligne de transfert 1 peut être stockée sur un autre navire servant à assister

Le premier navire 5 lors de la mise en place de la ligne 1 pour la première fois.

La séquence de mise en place de la ligne 1 est représentée aux figures 2 à 5.

La figure 2 représente l'état initial à partir duquel on fait descendre la ligne 1, dont l'extrémité 47 doit être connectée au navire 5 ou à une installation quelconque. Cette extrémité 47 est introduite et guidée dans le tube 16 par l'intermédiaire du câble 46 (Fig. 3).

L'introduction de la ligne 1 dans le tube 16 se poursuit jusqu'à ce que l'extrémité 8 à connecter sur la bouée soit immobilisée sur le tube 16, ceci peut être réalisé par une butée 48 solidaire de l'extrémité 8 de la ligne et qui coopère avec une butée 49 solidaire du tube de guidage 28.

Lors des phases de descente de la ligne 1, celle-ci peut être suspendue à un connecteur temporaire 50, télécommandable par exemple par une ligne hydraulique 51. Le connecteur temporaire 50 est suspendu à une installation de surface, tel un navire, par un câble 52.

La figure 4 représente l'instant où l'extrémité 8 de la ligne 1 a été mise en place dans le tube-guide 16 et où le connecteur 50 est déjà retiré.

Une fois ceci réalisé, le vérin 18 est actionné pour tirer vers lui le tube-guide 16 qui pivote autour de l'axe de basculement 17 et ce jusqu'à ce que l'extrémité 8 de la ligne soit située vis-à-vis du connecteur 7 solidaire de la bouée 3.

Le positionnement du tube-guide 16 peut être réalisé par une butée latérale 53 qui vient en appui sur le bras 20.

Dans le cas de l'exemple décrit, une fois que le tube-guide 16 a été mis en position basculée, les axes de révolutions 54 et 55 du connecteur 7 et de l'extrémité 8 respectivement, sont alignés (Fig. 5).

Pour réaliser la connexion entre l'extrémité 8 de la ligne 1, on descend le cadre 35 auquel est fixé la pince 27 comme cela est représenté à la figure 8.

Le cadre 35 est positionné sur la bouée 3 grâce à un moyen de centrage 36 comprenant des ergots de positionnement 56.

Une fois le cadre 35 mis en place, le vérin 45 est actionné et provoque la rotation du bras 34 de soutien de la pince 27 autour de l'axe 57. Le vérin 44 est relié au cadre par une articulation 58 et au bras 34 par une articulation 59.

La rotation du bras 34 autour de l'axe se poursuit jusqu'à ce que les fourches des mors 25 et 26 coopèrent avec la canalisation 9 et l'extrémité 8 de la ligne de transfert 1.

Ceci peut être contrôlé grâce à des caméras fixées, par exemple, sur la pince 27 aux niveaux des mors.

Bien entendu, la pince 27 est positionnée par rapport au connecteur 7 et à l'extrémité 8 pour que l'espace compris entre les mors 25 et 26 comprenne les butées d'appui 23 et 24.

L'extrémité des mors 25 ou 26 pourra comporter un chanfrein 60 permettant, si nécessaire, un positionnement plus aisé des fourches relativement aux butées 23 et 24.

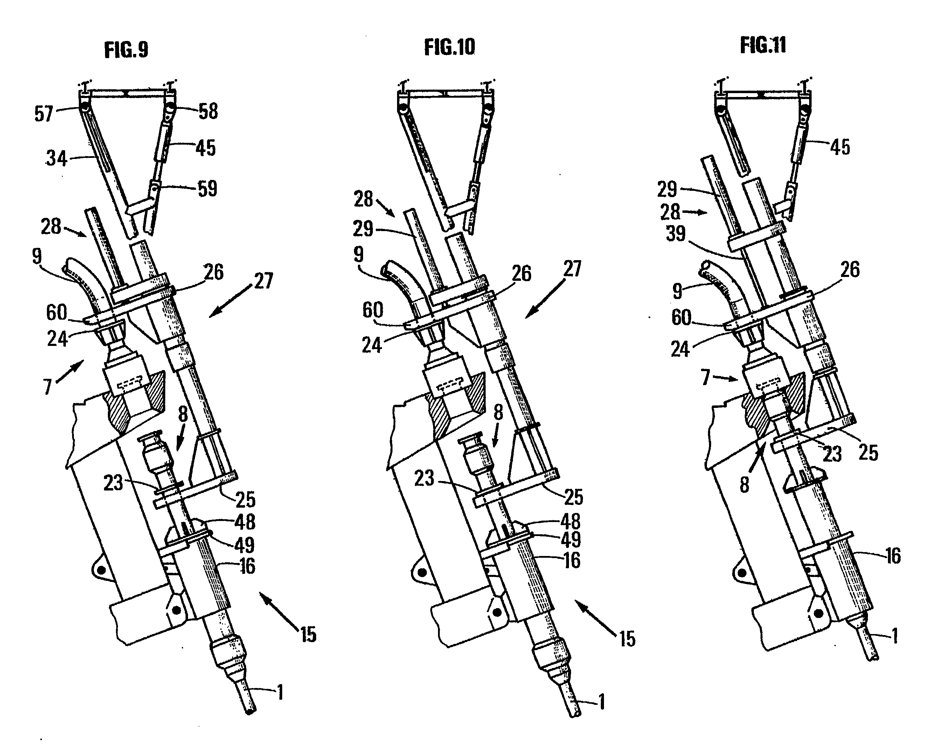

Dans le cas de la figure 9, un tel chanfrein est inutile, puisque lorsque la pince 27 est en place, il subsiste un espace libre entre les mors 25 et 26 et les butées 23 et 24. Ceci est possible du fait d'un bon positionnement initial de la pince 27 relativement aux butées 25 et 26.

Une fois la pince 27 positionnée, on actionne le vérin 28 qui provoque le rapprochement des mors 25 et 26. Ceux-ci viennent en appui sur les butées 23 et 24 et déplacent l'extrémité 8 de la ligne 1 jusqu'à réaliser sa connexion avec le connecteur 7.

Le verrouillage du connecteur 7 et de l'extrémité 8 de la ligne 1 peut être automatique ou télécommandé.

Une fois la connexion réalisée, il est possible d'actionner le vérin en sens inverse de celui qui a servi à réaliser le rapprochement des mors 25 et 26 pour écarter ces derniers et pouvoir dégager la pince 27 par la mise en marche du vérin 45 et enfin réaliser éventuellement le retrait du cadre 35.

Le fonctionnement de la pince en lui-même, ne pose pas de difficulté de compréhension, toutefois, il convient de préciser que l'ordre d'entrée en fonction des mors dépend des forces de frottement et de gravité existant entre le manchon extérieur 38 et le manchon cylindrique 33, d'une part, et entre ce même manchon 33 et la tige 31, d'autre part, et, bien entendu, des positions des différentes butées 23, 24, 40 et 42.

Lorsque la ligne de transfert 1 comporte plusieurs conduits, il est important de pouvoir positionner ces différents conduits relativement aux conduits correspondants se trouvant du côté de la bouée 3 et du connecteur 7.

Pour ce faire, le tube de guidage 16 peut comporter un ou plusieurs ergots 61 destinés à coopérer avec des rainures qui peuvent être longitudinales 62 et qui sont aménagées sur l'extrémité 8 de la ligne de transfert 1 en dessous de la butée 48.

Bien entendu, le nombre de rainures 62 est fonction de la symétrie de répartition des conduits dans la ligne 1.

Ainsi, s'il n'y a pas de symétrie, il n'y aura qu'une seule rainure puisqu'il faudra imposer une position angulaire de la ligne 1.

Si la symétrie de répartition des conduits est de 180°, il pourra y avoir au plus deux rainures et deux ergots, si la symétrie de répartition est de 120°, il pourra y avoir au plus trois rainures et trois ergots et ainsi de suite.

Bien entendu, il est avantageux que la base 63 des rainures soit profilée de manière à avoir une forme évasée qui permet la pénétration des ergots 61 dans les rainures 62, sans risque de blocage des ergots 61 sur le bord de l'espace 64 compris entre deux rainures.

Ce mode de réalisation peut présenter un risque de détérioration de la ligne de transfert 1, lors de la descente de celle-ci à travers le tube-guide 16, dans la mesure où la ligne 1 peut entrer en contact avec les ergots 61.

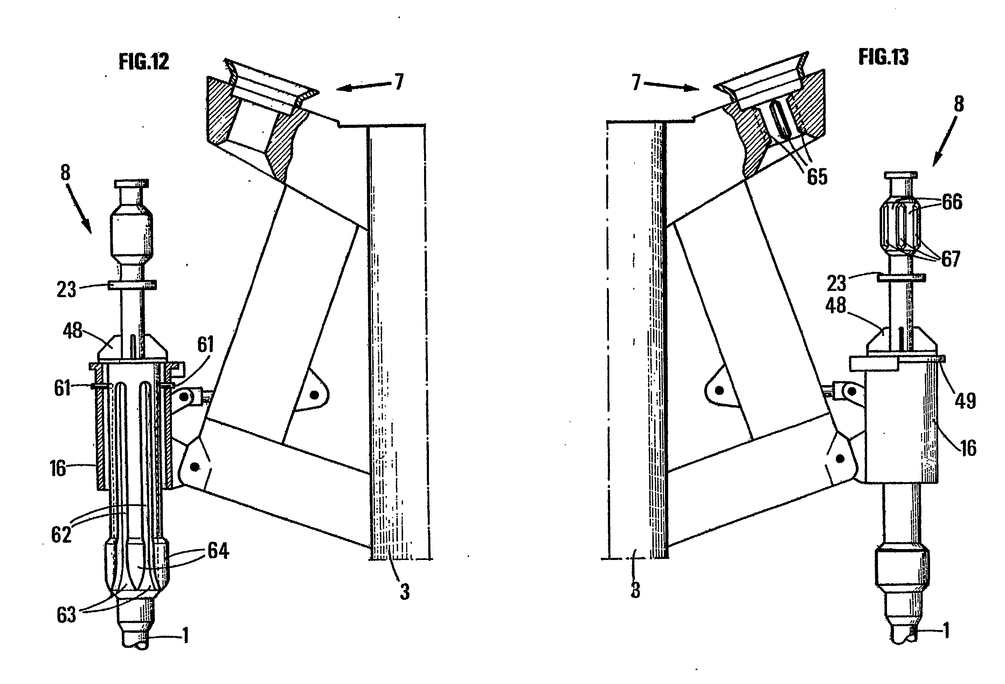

Cet inconvénient peut être réduit en donnant aux ergots 61 une forme de rail, telle celle représentée à la figure 13 et qui est désignée par la référence 65.

L'inconvénient présenté ci-dessus peut être totalement éliminé par la configuration représentée à la figure 13. En effet, dans le cas de cette figure, le tube de guidage 16 ne comporte pas d'ergot ou de rail de guidage sur sa face interne.

Les rainures de guidage 66 sont situées sur l'extrémité 8 de la ligne de transfert 1 au dessus de la butée 48 et coopèrent avec des doigts ou des rails 65 solidaires et situés au dessous du connecteur 7.

Ainsi, l'orientation de la ligne 1 se fait lors du rapprochement de l'extrémité 8 du connecteur 7.

Les bords des rails 65 et des espaces 67 entre rainure pourront être avantageusement profilés, de manière à faciliter le positionnement de l'extrémité 8 de la ligne 1 relativement au connecteur 7.

En ce qui concerne la configuration représentée à la figure 12, on ne sortira pas du cadre de la présente invention en plaçant les ergots 61 sur l'extrémité 8 de la ligne de transfert 1 et les rainures à l'intérieur du tube-guide 16.

## Revendications

1. Dispositif de mise en place et de connexion à distance d'une extrémité (8) d'un élément allongé (1) à un connecteur (7) solidaire d'une installation principale (3), le dispositif comportant des moyens de guidage (15) en translation de ladite extrémité (8) dudit élément allongé (1), des premiers moyens de déplacement (18) desdits moyens de guidage relativement à ladite installation principale (3) comportant un axe de rotation (17) solidaire de ladite installation et autour duquel les moyens de guidage peuvent basculer entre deux positions et un vérin (18), le vérin ayant deux extrémités, une première étant solidaire desdits moyens de guidage (15) et une seconde de ladite installation (3), le dispositif comportant en outre des deuxièmes moyens de déplacement (27) de ladite extrémité (8) relativement audit connecteur (7), lesdits premiers moyens de déplacement opérant indépendamment desdits deuxièmes moyens de déplacement, caractérisé en ce que ledit connecteur (7) comporte une première butée (24), en ce que ladite extrémité (8) de l'élément allongé comporte une deuxième butée (23), en ce que lesdits deuxièmes moyens de déplacement comportent deux mors (25, 26) adaptés à coopérer avec lesdites première et deuxième butées et en ce que lesdits mors sont mus par un vérin (28).

2. Dispositif selon la revendication 1, caractérisé en ce qu'il comporte une articulation comprenant un palier et un arbre dont l'axe est sensiblement horizontal et en ce que lesdits moyens de guidage comportent un tube ayant un axe de révolution contenu sensiblement dans un plan vertical et en ce que ladite articulation relie ladite installation principale audit tube.

3. Dispositif selon la revendication 1, caractérisé en ce que lesdits deuxièmes moyens de déplacement (27) sont montés sur un bras articulé (34) solidaire de l'installation principale (3).

4. Dispositif selon la revendication 3, caractérisé en ce que lesdits deuxièmes moyens de déplacement (27) comportent un vérin (44) ayant deux extrémités dont l'une est solidaire de l'installation principale (3) et l'autre dudit bras (34).

5. Dispositif selon la revendication 2, caractérisé en ce que ledit tube (16) comporte au moins un ergot ou rail (61) et en ce que l'extrémité (8) de l'élément allongé (1) comporte au moins une rainure (62) adaptée à coopérer avec ledit ergot (61).

6. Dispositif selon la revendication 2, caractérisé en ce que ladite extrémité (8) de l'élément allongé (1) comporte au moins une rainure (66) et en ce que ledit connecteur (7) comporte au moins un ergot ou rail (65) adapté à coopérer avec ladite rainure (66).

7. Dispositif selon la revendication 1, caractérisé en ce que lesdits deuxièmes moyens de déplacement sont escamotables relativement aux premiers moyens de déplacement.

8. Méthode pour réaliser la connexion à distance d'une extrémité (8) d'un élément allongé (1) avec un connecteur (7) solidaire d'une installation principale (3), caractérisée en ce qu'elle comporte des étapes suivantes:
   - mise en place de ladite extrémité (8) relativement à un moyen de guidage (15),
   - déplacement à l'aide de premiers moyens de déplacement dudit moyen de guidage (15) de manière à mettre ladite extrémité (8) et ledit connecteur (7) dans l'alignement l'un de l'autre,
   - positionnement des deuxièmes moyens de déplacement, lesdits deuxièmes moyens de déplacement étant indépendants desdits premiers moyens de déplacement, et
   - déplacement de ladite extrémité (8) relativement audit connecteur (7) jusqu'à la connexion effective de ces deux éléments.

9. Méthode selon la revendication 8, caractérisée en ce que le déplacement dudit moyen de guidage (15) correspond à un basculement autour d'un axe sensiblement horizontal.

10. Méthode selon la revendication 8, caractérisée en ce que le déplacement dudit moyen de guidage et le positionnement desdits deuxièmes moyens de déplacement sont réalisés simultanément.

11. Méthode selon la revendication 10, caractérisée en ce que le positionnement desdits deuxièmes moyens de déplacement est obtenu par le déplacement dudit moyen de guidage.

## Patentansprüche

1. Vorrichtung zum Ferneinsetzen und Fernverbinden eines Endes (8) eines länglichen Elements (1) mit einem Verbinder (7), der fest mit einer Hauptanordnung (3) verbunden ist, wobei die Vorrichtung Einrichtungen zur Translationsführung (15) des Endes (8) dieses länglichen Elementes (1) aufweist, erste Bewegungs- bzw. Verschiebungseinrichtungen (18) dieser Führungseinrichtungen relativ zu dieser Hauptanordnung (3) mit einer fest mit dieser Anordnung verbundenen Drehachse (17) und um die die Führungseinrichtungen zwischen zwei Stellungen verkippen können sowie einem Stellzylinder (18), wobei der Stellzylinder über zwei Enden verfügt, wobei ein erstes fest mit diesen Führungseinrichtungen (15) und ein zweites mit dieser Anordnung (3) verbunden ist und wobei die Vorrichtung im übrigen zweite Einrichtungen zum Bewegen oder Verschieben (27) dieses Endes (8) relativ zum Verbinder (7) aufweist und die ersten Bewegungs- oder Verschiebungseinrichtungen unabhängig von den zweiten Bewegungs- oder Verschiebungseinrichtungen wirken, dadurch gekennzeichnet, daß dieser Verbinder (7) über einen ersten Anschlag (24) verfügt, daß dieses Ende (8) des länglichen Elements einen zweiten Anschlag (23) aufweist, daß diese zweiten Bewegungs- oder Verschiebungseinrichtungen zwei Backen (25, 26) umfassen, die so ausgebildet sind, daß sie mit diesen ersten und zweiten Anschlägen zusammenwirken und daß diese Backen durch einen Stellzylinder (28) bewegt werden.

2. Vorrichtung nach Anspruch 1, dadurch gekennzeichnet, daß sie eine Gelenkverbindung mit einem Lager und einer Welle umfaßt, deren Achse im wesentlichen horizontal ist und daß diese Führungseinrichtungen eine Röhre mit einer Umdrehungsachse umfassen, die im wesentlichen in einer Vertikalebene enthalten ist und daß diese Gelenkverbindung diese Hauptanordnung mit dieser Röhre verbindet.

3. Vorrichtung nach Anspruch 1, dadurch gekennzeichnet daß diese zweiten Bewegungs- bzw. Verschiebungseinrichtungen (27) auf einem Gelenkarm (34) gelagert sind, der fest mit der Hauptanordnung (3) verbunden ist.

4. Vorrichtung nach Anspruch 3, dadurch gekennzeichnet, daß diese zweiten Bewegungs- oder Verschiebungseinrichtungen (27) einen Stellzylinder (44) mit zwei Enden umfassen, von denen eines fest mit der Hauptanordnung (3), das andere mit diesem Arm (34) verbunden ist.

5. Vorrichtung nach Anspruch 2, dadurch gekennzeichnet, daß diese Röhre (16) wenigstens einen Zapfen oder eine Schiene (61) umfaßt und daß dieses Ende (8) des länglichen Elements (1) wenigstens eine Nut (62) umfaßt, die so ausgebildet ist, daß sie mit diesem Zapfen (61) zusammenwirkt.

6. Vorrichtung nach Anspruch 2, dadurch gekennzeichnet, daß dieses Ende (8) des länglichen Elements (1) wenigstens eine Nut (66) umfaßt und daß dieser Verbinder (7) wenigstens einen Zapfen oder Schiene (65) umfaßt, die so ausgebildet ist, daß sie mit dieser Nut (66) zusammenwirkt.

7. Vorrichtung nach Anspruch 1, dadurch gekennzeichnet, daß die beiden Bewegungs- bzw. Verschiebungseinrichtungen relativ zu den ersten Bewegungs- bzw. Verschiebungseinrichtungen versenkbar sind.

8. Verfahren zur Herstellung der Fernverbindung eines Endes (8) eines länglichen Elements (1) mit einem fest mit einer Hauptanordnung (3) verbundenen Verbinder (7), dadurch gekennzeichnet, daß sie die folgenden Stufen aufweist.
   – Anordnung dieses Endes (8) relativ zu einem Führungsmittel (15),
   – Bewegen bzw. Verschieben mit Hilfe erster Bewegungs- bzw. Verschiebungseinrichtungen dieses Führungsmittels (15), derart, daß dieses Ende (8) und dieser Verbinder (7) in Ausrichtung zueinander gesetzt werden,
   – Positionieren der zweiten Bewegungs- bzw. Verschiebungseinrichtungen, wobei die zweiten Bewegungs- bzw. Verschiebungseinrichtungen unabhängig von diesen ersten Bewegungs- bzw. Verschiebungseinrichtungen sind und
   – Bewegen bzw. Verschieben dieses ersten Endes (8) relativ zum Verbinder (7) bis zur effektiven Verbindung dieser beiden Elemente.

9. Verfahren nach Anspruch 8, dadurch gekennzeichnet, daß das Bewegen bzw. Verschieben dieses Führungsmittels (15) einem Verkippen um eine im wesentlichen horizontale Achse entspricht.

10. Verfahren nach Anspruch 8, dadurch gekennzeichnet, daß das Bewegen bzw. Verschieben dieses Führungsmittels und das Positionieren dieser zweiten Bewegungs- bzw. Verschiebungsmittel gleichzeitig durchgeführt werden.

11. Verfahren nach Anspruch 10, dadurch gekennzeichnet, daß das Positionieren dieser zweiten Bewegungs- oder Verschiebungsmittel durch Bewegen bzw. Verschieben dieser Führungseinrichtung erhalten wird.

**Claims**

1. Device for remote positioning and connecting one end (8) of an elongated element (1) to a connector (7) forming part of a main installation (3), the device comprising a means for guiding (15) in translation of the said end (8) of the said elongated element (1), a first means for displacing (18) the said means of guidance relative to the said main installation (3), comprising an axis of rotation (17) forming part of the said installation and about which the means of guidance can pivot between two positions and an actuator (18), the actuator having two ends, a first end which forms part of the said means of guidance (15) and a second end forming part of the said installation (3), the device also including a second means of displacement (27) of the said end (8) relative to the said connector (7), the said first means of displacement operating independently of the second means of displacement, characterised in that the said connector (7) includes a first stop (24) and in that the said end (8) of the elongated element included a second stop (23) and that the said second means of displacement includes two jaws (25, 26) designed to work in conjunction with the said first and second stops and in that the said jaws are operated by an actuator (28).

2. Device in accordance with claim 1, characterised in that it includes an articulation which comprises a bearing and a shaft, the axis being basically horizontal and in that the said means of guidance comprises a tube which has an axis of revolution contained basically in a vertical plane and in that the said articulation connects the said main installation to the said tube.

3. Device in accordance with claim 1, characterised in that the said second means of displacement (27) is mounted on a articulated arm (34) forming part of the main installation (3).

4. Device in accordance with claim 3, characterised in that the said second means of displacement (27) comprises an actuator (44) having two ends where one forms part of the main installation (3) and the other forms part of the said arm (34).

5. Device in accordance with claim 2, characterised in that the said tube (16) includes at least one peg or rail (61) and in that the end (8) of the elongated element (1) includes at least one groove (62) designed to work in conjunction with the said pin (61).

6. Device in accordance with claim 2, characterised in that the said end (8) of the elongated element (1) includes at least one groove (66) and in that the said connector (7) includes at least one peg or rail (65) designed to work in conjunction with the said groove (66).

7. Device in accordance with claim 1, characterised in that the said second means of displacement is retractable relative to the first means of displacement.

8. Method for making a remote connection to one end (8) of an elongated element (1) by means of a connector (7) forming part of a main installation (3), characterised in that it comprises the following stages:
   – positioning of the said end (8) relative to a means of guidance (15)
   – displacement of the said means of guidance (15) by means of the first means of displacement in order to position the said end (8) and the said connector (7) in alignment with each other
   – positioning of the second means of displacement, the said second means of displacement being independent of the said first means of displacement, and
   – displacement of the said end (8) relative to the said connector (7) until there is an effective connection between these two items.

9. Method in accordance with claim 8, characterised in that the displacement of the said means of guidance (15) corresponds to a pivoting movement about an axis which is basically horizontal.

10. Method in accordance with claim 8, characterised in that the displacement of the said means of guidance and the positioning of the said second means of displacement are carried out simultaneously.

11. Method in accordance with claim 10, characterised in that the positioning of the second means of displacement is achieved by the displacement of the said means of guidance.

**FIG.1**

FIG.3

FIG.2

FIG.5

FIG.4

EP 0 223 666 B1

FIG.7

FIG.6

FIG.8

FIG.9

FIG.10

FIG.11

FIG.13

FIG.12